# EUROPEAN PATENT SPECIFICATION

(11) **EP 1 561 677 B1**
(45) Date of publication and mention of the grant of the patent: **08.08.2007**
(21) Application number: 05000282.3
(22) Date of filing: 07.01.2005
(51) Int. Cl.: B62K 21/08

(54) **Steering damper device**
Lenkungsdämpfer
Amortisseur de direction

(30) Priority: 05.02.2004 JP 2004029443
(43) Date of publication of application: 10.08.2005
(73) Proprietor: HONDA MOTOR CO., Ltd., Tokyo (JP)
(72) Inventor: Takeuchi, Yoshiaki, 4-1, Chuo 1-chome Wako-shi Saitama (JP); Ono, Makoto, 4-1, Chuo 1-chome Wako-shi Saitama (JP); Machida, Kenichi, 4-1, Chuo 1-chome Wako-shi Saitama (JP)
(74) Representative: Rupp, Christian

(56) References cited:
- EP-A- 1 248 013
- US-A- 4 811 807

## Description

This invention relates to a steering damper device for a motorcycle configured to suppress deflection of a handgrip at the time of driving by use of a damping force, more particularly to the one rendering the damping force variable.

A steering damper device configured to generate a damping force against rotation of a steering shaft to avoid deflection of a handgrip attributable to a kickback upon a disturbance has been publicly known. Moreover, in terms of this steering damper device, one configured to render the damping force variable so as to generate the damping force only when necessary and not to generate the unnecessary damping force in other cases has been also publicly known. For example, there are one configured to control based on a steering angle and traveling speed, one configured to control based on variation in a load on a front wheel, and the like. In addition, focusing on the fact that a kickback is apt to occur as a load on a front wheel is reduced upon generation of acceleration, there is also one configured to suppress the kickback by detecting an increase in acceleration and causing a steering damper to generate damping force in advance (see Patent Document 1).

### [Patent Document 1] Japanese Unexamined Patent Publication No. 2002 - 302085

Incidentally, it is merely suffices to increase the damping force in advance to suppress the kickback. However, in so doing, there may be a case where a load on a handgrip becomes excessive upon a turn in a low speed range when nimble handling is required. Accordingly, in this case, it is desirable to reduce the load on the handgrip. On the other hand, when driving straight at high speed, it is desirable to press the handgrip not to be deflected easily, and thereby to increase the damping force. However, the conventional steering damper device targeted for suppressing deflection of the handgrip in the event of the kickback cannot always achieve such an effect. Accordingly, it is an object to achieve this effect.

Patent document EP 1 248 013 A2 relates to a steering damper system for a motorcycle for damping a swing of the handle during running, and particularly to one that can vary the damping force. Therefore, a variable valve, which is a variable valve including an electromagnetic solenoid, is used which can be changed over in three fixed positions (B, N, A) by a moveable plunger to obtain three different magnitudes of damping force. The damping force is determined depending on velocity threshold values (V1, V2; V1<V2) and/or acceleration threshold values (G1,(V), G2(V); G1(V)<G2(V)). The valve is set to be in position A in case when V <V and G<G1(V), the valve is set to be in position B in case when V>V2 and/ or G>G2(V), and the valve is set to be in position N in any other case.

To attain the object, a steering damper device for a motorcycle according to claim 1 is a steering damper device having a steering damper configured to apply damping force to a rotational operation of a front wheel steering system supported by a front portion of a vehicle (herein after also referred to as car) body and to render magnitude of this damping force variable, and controlling means for adjusting the damping force of this steering damper, whereby the controlling means adjusts the damping force based on car speed, and the damping force is fixed to a minimum when the car speed is equal to or below first reference speed and the damping force is fixed to a maximum when the car speed is equal to or above second reference speed which is greater than the first reference speed V1;
the controlling means variably adjusts the damping force in response to a variation in the car speed when the car speed is in an intermediate speed range between the first reference speed and the second reference speed;
only when the car speed is in the intermediate speed range, the controlling means adds acceleration as a parameter in addition to the car speed and causes the damping force to vary depending on these car speed and the acceleration of the car body.

According to claim 1, the controlling means adjusts the damping force based on the car speed, fixes the damping force to the minimum when the car speed is equal to or below the first reference speed, and fixes the damping force to the maximum when the car speed is equal to or above the second reference speed greater than the first reference speed V1. Accordingly, in a speed range where nimble handling is required, it is possible to minimize a load on a handgrip and thereby to improve maneuverability of the car body. Moreover, it is possible to maintain a movement of the car body stable by increasing the damping force in a speed range on a higher side and thereby maximizing the load on the handgrip so as to suppress deflection of the handgrip.

Advantageous embodiments of the invention are set out in dependent claims 2 and 3.
Fig. 1 is a perspective view of a motorcycle applying an embodiment.
Fig. 2 is a side view of a front portion of a car body indicating a portion of a steering damper device.
Fig. 3 is a plan view of the same portion.
Fig. 4 is a view showing a schematic structure of a steering damper.
Fig. 5 is a graph showing a method of controlling damping force.
Fig. 6 is a view showing a three-dimensional graph of a control current map.
Fig. 7 is a view showing a table for describing the control current map.
Fig. 8 is a flowchart showing a procedure for determination of a control current.

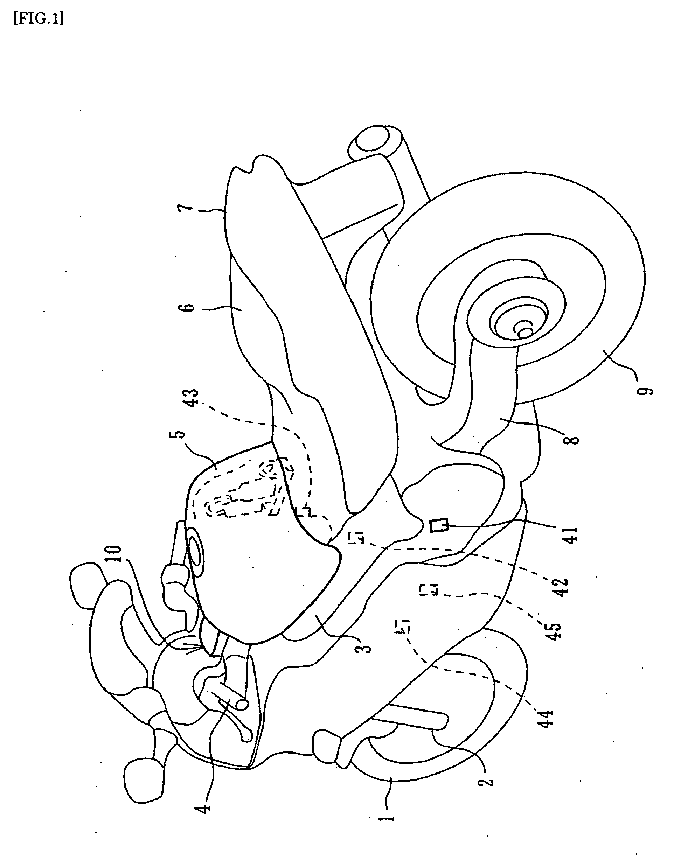

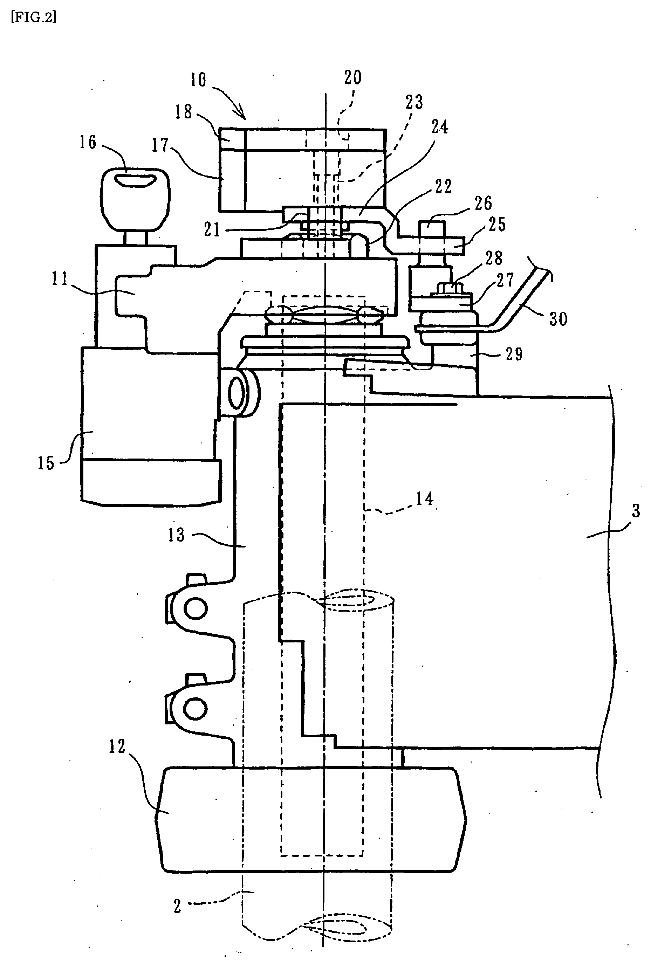

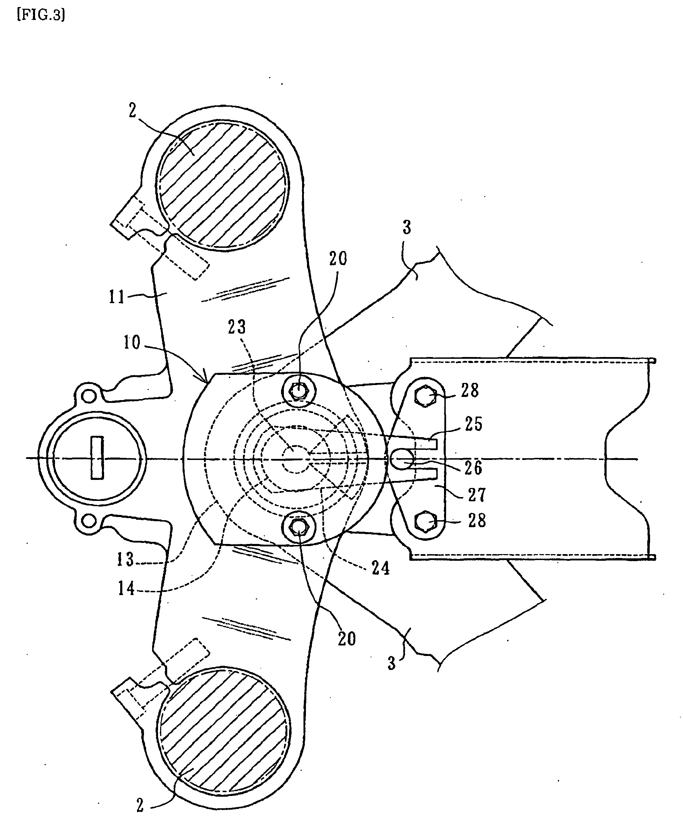

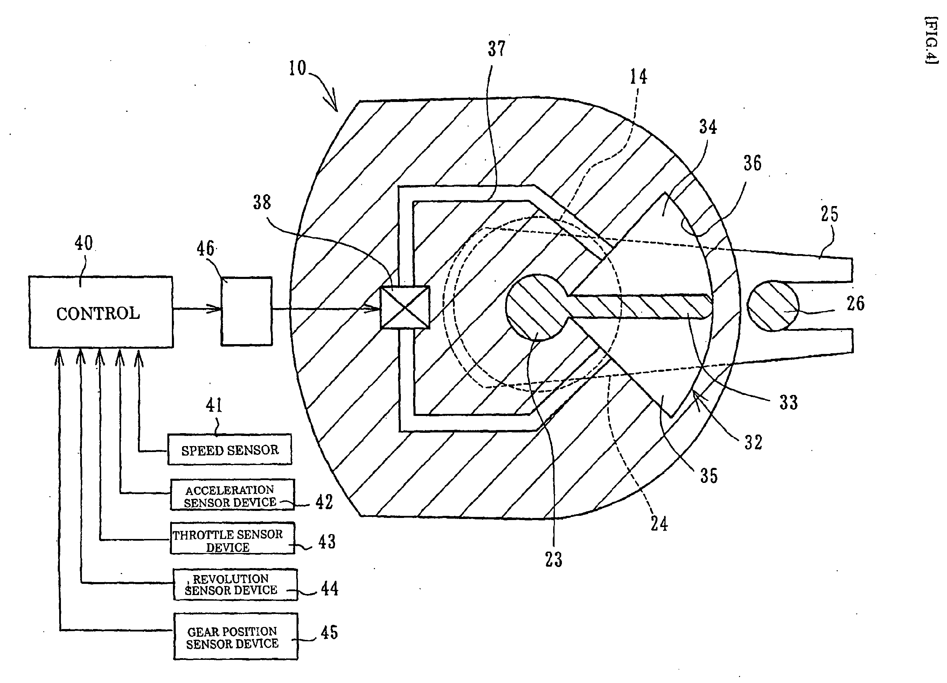

An embodiment will be described below based on the drawings. Fig. 1 is a perspective view showing a motorcycle applying this embodiment. Fig. 2 is a side view of a structure of a front portion of a car body provided with a steering damper. Fig. 3 is a plan view of the same portion. Fig. 4 is a view showing a schematic structure of the steering damper.

In Fig. 1, an upper portion of a front fork 2 supporting a front wheel 1 at a lower end is connected to a front portion of a car body frame 3 and is rendered rotatable by a handgrip 4. A fuel tank 5 is supported on the car body frame 3. Reference numeral 6 denotes a seat, reference numeral 7 denotes a rear cowl, reference numeral 8 denotes a rear swing arm, and reference numeral 9 denotes a rear wheel.

Next, a steering damper will be described. As shown in Figs. 2 and 3, a steering damper 10 is provided between a top bridge 11 to which the handgrip 4 is attached and a front end portion of the car body frame 3. The top bridge 11 is a member which vertically sandwiches and is thereby integrated with a steering shaft 14 (indicated by a center line) supported by a head pipe 13 with a bottom bridge 12 placed below. The top bridge 11, the bottom bridge 12, and the steering shaft 14 rotate integrally.

A right and left pair of upper portions of the front fork 2 are respectively supported by the top bridge 11 and the bottom bridge 12. The head pipe 13 is a pipe-shaped portion integrated with the front end portion of the car body frame 3, and the car body frame 3 forms a right and left pair which extend backward from the head pipe 13 (Fig. 3). A steering lock 15 is provided in front of the head pipe 13, which is unlocked by a key 16.

The steering damper 10 of this embodiment is a hydraulic damper for preventing a kickback, which includes a main body portion 17 and a lid 18 and is fastened to a nut portion provided on a boss 21 on the top bridge 11 by use of a bolt 20. In this case, the main body portion 17 and the lid 18 are also integrated by the bolt 20. Reference numeral 22 denotes a nut for connecting the top bridge 11 and an upper end of the steering shaft 14.

A shaft 23 is provided inside the steering damper 10 such that an axial line thereof is directed in a vertical direction in Fig. 2, and a lower end of the shaft 23 protrudes downward from the main body portion 17 and is integrated with a front end of an arm 24. The shaft 23 is disposed coaxially with the steering shaft 14.

The arm 24 is bent into a crank shape in light of a side view and extends in a front and back direction relative to the center of the car body in light of a plan view, whereby a front end portion thereof protrudes upward from the nut 22 and is integrated with the shaft 23 protruding into the steering damper 10. A rear end portion of the arm 24 constitutes a fork portion 25 which is engaged with a boss portion 26 on the car body frame 3.

The boss portion 26 is provided so as to protrude upward toward a central portion of a bracket 27, and both right and left ends of the bracket 27 are fitted to a boss 29, which is provided in the center at a front end portion of the front wheel 1, by use of a bolt 28. A stay 30 protruding out of a front end of the fuel tank 5 is fastened onto the boss 29 by the bolt 28.

Fig. 4 schematically shows the structure of the steering damper 10, in which a fan-shaped liquid chamber 32 spreading backward is provided inside the steering damper 10; meanwhile, the shaft 23 is positioned at a pivot thereof, and the inside of the liquid chamber 32 is divided into a right liquid chamber 34 and a left liquid chamber 35 by a wing portion 33 which extends integrally backward from the shaft 23.

A tip end of the wing portion 33 constitutes a sliding surface, which slidably abuts on an inner surface of an arc wall 36 of the liquid chamber 32. Incompressible liquid such as oil is filled in the right liquid chamber 34 and the left liquid chamber 35, which are connected to each other by a bypass passage 37. A variable valve 37 is provided in the middle of the bypass passage 37. The variable valve 38 includes a narrowing passage for generating damping force, and a linear solenoid for changing a cross-sectional passage area of this narrowing passage and thereby adjusting the damping force. The linear solenoid is configured to change the cross-sectional passage area of the narrowing passage depending on a control current thereof and to change the damping force. The control current is controlled by a control device 40.

A maximum value of the damping force in the steering damper 10 is determined either by a hardware limit value or by a software limit value. The hardware limit value is a limit value to be determined by the structure of the steering damper 10, which is determined by capacities of the liquid chambers 34 and 35, a pressure-receiving area of the wing portion 35, the cross-sectional passage area of the variable valve 38 when narrowed to the maximum as well as a maximum output of the linear solenoid, and the like. The software limit value is a maximum value to be determined by a reason in terms of control in spite of being the damping force smaller than the hardware limit value, which constitutes an upper limit in terms of control even if the hardware limit value still has a margin. This embodiment can apply any of the limit values. A maximum value C2 in this embodiment is set to a range sufficient for maintaining a fail-safe principle which does not cause a problem for steering even if the damping force stays at the maximum value C2 for some reason.

Here, the damping force of the steering damper 10 varies depending on a drift velocity (flow rate / time) of the liquid passing through the narrowing passage of the variable valve 38. That is, even when the same amount of the liquid passes through the narrowing passage having the same cross-sectional passage area, the generated damping force will not grow very large if the liquid moves over time. On the contrary, the damping force grows large upon rapid movement in a short time period.

What provides this drift velocity is rotational speed of the wing portion 35, that is, rotational speed of the steering shaft 14. Meanwhile, the rotational speed of the steering shaft 14 is influenced more by an external factor which is an impact load upon the kickback than by artificial manipulation such as turning. This means that the generated damping force varies between an event of normal handling and an event of a kickback input even when the degree of narrowing in the variable valve 38 is the same. Accordingly, the damping force in this application will be defined by setting the rotational speed of the steering shaft 14 at the time of artificial handling to a predetermined value and will be measured under a condition of the constant rotational speed of this steering shaft 14.

The control device 40 is formed of a microcomputer and the like, performs control based on respective detection signals of a speed sensor 41, an acceleration sensor 42, and moreover, a throttle sensor 43, an engine revolution sensor 44, a gear position sensor 45, and the like, and changes the narrowing degree and adjusts the damping force by instructing a current control portion 46 to flow a given control current onto the linear solenoid of the variable valve 38 under a given condition to be described later. A method of controlling the damping force of the steering damper 10 by the control device 40 will be performed based on the car speed and will be adjusted by partially adding the acceleration. Details will be described later.

All the respective sensors configured to send the detection signals to the control device 40 are publicly known. Among them, the speed sensor 41 detects the car speed by use of the number of revolutions of an output sprocket of the engine, and the like. The acceleration sensor 42 is a G sensor configured to detect the acceleration of the car body, which is provided in an appropriate position of the car body. The throttle sensor 43 detects a degree of aperture of a throttle provided on an air intake passage. The engine revolution sensor 44 detects the number of revolutions of a crank shaft. The gear position sensor 45 detects a current gear position of a transmission.

Here, it is also possible to calculate the car body speed based on results of detection of the engine revolution sensor 44 for detecting the number of revolutions of the engine and of the gear position sensor 45 for detecting the gear position. In this way, it is possible to use the engine revolution sensor 44 and the gear position sensor 45 instead of the speed sensor 41. Moreover, by calculating the acceleration as unit time variation of the car speed calculated based on the speed sensor 41, it is possible to use the speed sensor 41 instead of the acceleration sensor 42. In this way, it is not necessary to provide the specialized speed sensor 41 and the acceleration sensor 42 in particular, and the car speed and the acceleration can be accurately detected. Accordingly, it is possible to generate the appropriate damping force of the steering damper.

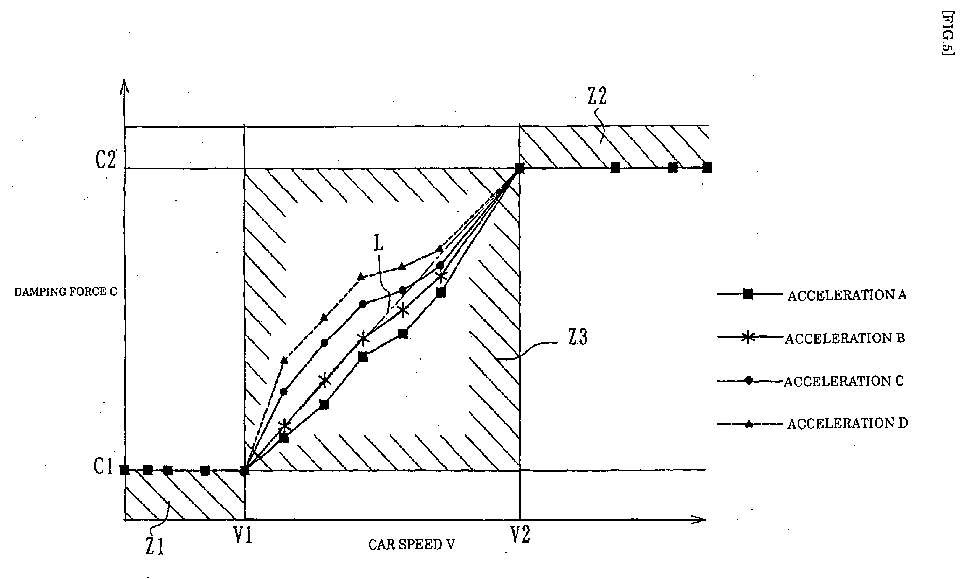

Next, a method of adjusting the damping force will be described. Fig. 5 is a graph showing this method, in which the control device 40 basically controls the damping force depending on the car speed, and adjusts the damping force by partially adding the acceleration. Specifically, the damping force is fixed to a minimum value C1 when the car speed is in a low speed range which is equal to or below first reference speed V1 set on a low speed side, and is fixed to the maximum value C2 when the car speed is in a high speed range which is equal to or above second reference speed V2 set on a high speed side. In terms of an intermediate car speed range between the first reference speed V1 and the second reference speed V2, the damping force changes continuously depending on the car speed and the acceleration.

The damping force is divided into a low speed side fixation range Z1 in which the damping force is fixed to the minimum value C1 at speed equal to or below the first reference speed V1, a high speed side fixation range Z2 in which the damping force is fixed to the maximum value C2 at speed equal to or above the second reference speed V2, and an intermediate variation range Z3 in which the damping force is set to a variable value between C1 and C2 in a speed range between them.

In the intermediate variation range Z3, the variation in the damping force relative to the car speed forms a curved shape, which is drawn as a nonlinear curved line (hereinafter referred to as an intermediate curved line) having at least a certain portion deviated upward or downward relative to a reference straight line L connecting the minimum value C1 representing the damping force at the first reference speed V1 and the maximum value C2 representing the damping force at the second reference speed V2.

Moreover, this intermediate curved line varies depending on the acceleration. That is, assuming that the intermediate lines shown as examples take four different acceleration values A to D and that the acceleration values A to D are in ascending order, the case of the smallest acceleration A among these intermediate curved lines always varies below the reference straight line L.

The intermediate curved line for the acceleration B slightly greater than A is almost aligned with the reference straight line L at a low speed side but is deviated downward from the reference straight line L at a high speed side. The intermediate curved line for the acceleration C greater than B is deviated upward from the reference straight line L at the low speed side but is deviated downward from the reference straight line L at the high speed side. The intermediate curved line for the acceleration D, which is the largest of the acceleration values shown as the example, always varies above the reference straight line L.

Here, in any of the intermediate curved lines, the damping force is equal to the minimum value C1 at the first reference speed V1 and the damping force is equal to the maximum value C2 at the second reference speed V2. In addition, when the damping force is not adjusted by adding the acceleration to the car speed, or in another word when the damping force is adjusted based only on the car speed, for example, the damping force may be changed along a non-smooth line, which connects a straight line parallel to a lateral axis (the car speed) at the constant damping force equal to C1, the reference straight line L, and a straight line parallel to the lateral axis at the constant damping force equal to C2. However, in this case as well, it is possible to define the intermediate variation range Z3 as a nonlinear intermediate curved line instead of the reference straight line L.

The low speed side fixation range Z1 maintains the damping force at the minimum value C1 in the low speed range where it is important to give priority to finer maneuverability of the car body as compared to a demand for suppressing deflection of the handgrip, that is, nimble handling while turning and such. In this way, nimble handling is effectuated. The first reference speed V1 is speed on an upper limit side when maintaining the damping force at the minimum value C1 without corresponding to the variation in the car speed. It is a boundary speed with the intermediate car speed range where it is not appropriate any more to give priority consideration to the handling when exceeding this speed and it is necessary to generate the damping force greater than C1 and thereby to suppress deflection of the handgrip, which is set to 80 km/h or the like, for example. The first reference speed V1 is arbitrarily determined in response to specifications of the vehicle together with the minimum value C1 of the damping force.

On the other hand, the high speed side fixation range Z2 maintains the damping force at the maximum value C2 and suppresses the deflection of the handgrip in a high speed range where it is important to give priority to suppression of the deflection of the handgrip attributable to artificial manipulation as much as possible by increasing the load on the handgrip, such as when driving straight at high speed, and where a large handgrip operation is not required. The second reference speed V2 is speed at a lower limit side when maintaining the damping force at the maximum value C2 without corresponding to the variation in the car speed. It is a boundary speed with the intermediate car speed range where it is necessary to reduce the damping force and to lighten the load for operating the handgrip as there are more chances to perform the handgrip operation being large to some extent when falling below this speed. The second reference speed V2 is equal to 200 km/h or the like, for example. The second reference speed V2 is arbitrarily determined in response to the specifications of the vehicle in the range where it is essential to give priority to the maintenance of the movement of the car body as compared to suppression of deflection of the handgrip of the vehicle.

In addition, the maximum value C2 of the damping force is an upper limit value of the damping force, which is set to maximize the load on the handgrip so as to effectuate handing to the extent necessary for driving while substantially suppressing deflection of the handgrip, and to the extent to bring about a sense of considerable weight for handling. Here, when the damping force is equal to the maximum value C2, it is by all means possible to suppress the kickback which occurs due to the impact load inputted to the front wheel. The maximum value C2 which is the upper limit value of the damping force may be either equal to the hardware limit value or equal to the software limit value as described previously.

The intermediate car speed is a speed range where it is required to adjust the load on the handgrip to an optimal value relative to the car speed thereof and the acceleration in a balanced manner so as to achieve suppression of the kickback in addition to a handling property and suppression of deflection of the handgrip. Generally, in this range, the larger damping force is required as the car speed and the acceleration are increased. That is, the damping force is increased more to suppress deflection of the handgrip along with an increase in the car speed. At the same time, when the acceleration is increased, a shared load on the front wheel is reduced and occurrence of the kickback tends to be more frequent. Accordingly, by increasing the damping force beforehand in response to the increase in the acceleration, it is possible to suppress deflection of the handgrip even if the kickback occurs as a result of an input of the impact load from a road surface. In this way, it is possible to deal with the kickback by adjusting the damping force with the acceleration.

The minimum value C1 is the damping force which aims at minimizing the load on the handgrip and thereby achieving nimble handling instead of suppression of deflection of the handgrip, so as to correspond only to a particularly large kickback. That is, there is very little flow resistance of the liquid in the variable valve 38 at the rotational speed of the steering shaft 14 in normal handling. Accordingly, a handgrip operation load is set to as small damping force as possible so as to be substantially close to an operation load to the extent generated by friction resistance at a bearing portion for the steering shaft 14.

However, even when the damping force being the minimum value C1 is set up as described above, the steering shaft 14 is apt to rotate at rapid speed by external force applied to the front wheel as the impact load upon an input of an extremely large kickback, and this rotational speed reaches an abnormal value greater than the rotational speed which is a condition for measuring the damping force used as the basis for determination of the minimum value C1. Accordingly, the flow resistance in the variable valve 38 is set up to be temporarily increased to generate large damping force, so as to be able to suppress deflection of the handgrip attributable to the kickback by this large damping force. The magnitude of the kickback to be suppressed in this case can be arbitrarily set in accordance with intended use of the vehicle and the like.

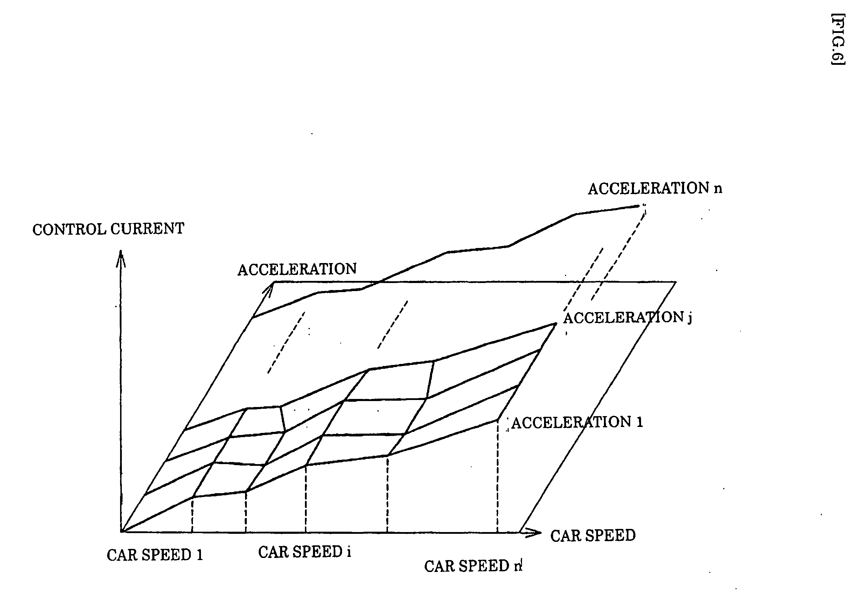

Fig. 6 shows a control current map which constitutes a basis for controlling the damping force applying two variables of the car speed and the acceleration as parameters in the intermediate variation range Z3. Specifically, the damping force is changed by narrowing the variable valve 38, and this narrowing operation is adjusted by the linear solenoid which constitutes the variable valve 38. Moreover, the linear solenoid is controlled to perform operation corresponding to a control current. This control current is determined by the control current map defined in the control device 40 in advance, and is controlled by the current control portion 46.

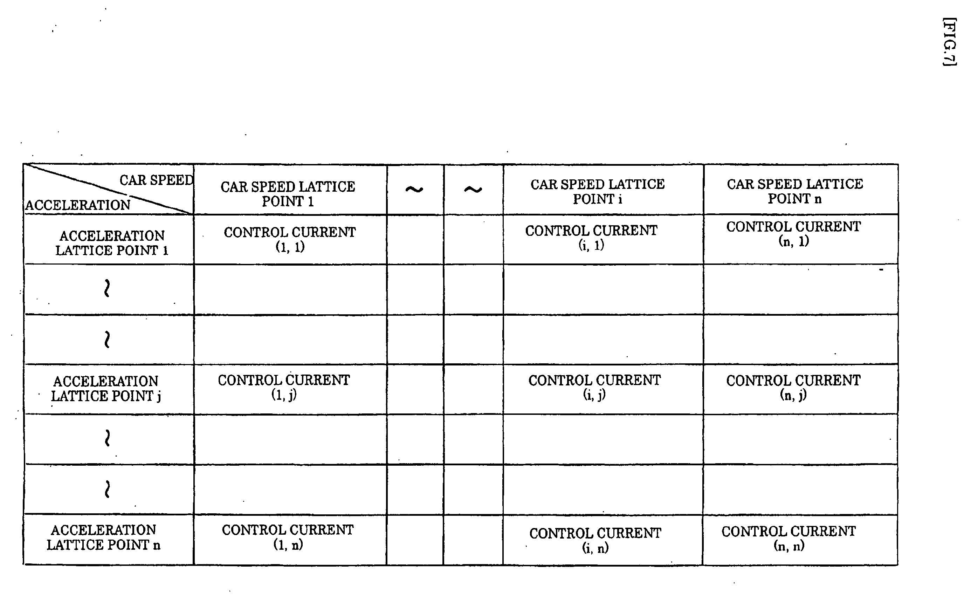

The control current map is a three-dimensional map of the car speed V on the lateral axis, the acceleration A on the longitudinal axis, and the control current I on the vertical axis. The control current is determined by lattice points of the car speed and the acceleration. Specifically, as shown in Fig. 7 arranging numerical values of the control current map in a two-dimensional table, when variation in car speed lattice point is described as 1...i...n while variation in acceleration point is described as 1...j...n, the control current will be defined as an intersecting point of these lattice points. For example, when the car speed lattice point is i and the acceleration lattice point is j, the control current is equal to a value determined at a point (i, j) in advance. The control current at each lattice point is determined in advance by an experiment. This control current is determined so as to adjust the load on the handgrip to be an optimal value relative to the car speed and the acceleration thereof. Moreover, when determining the control current at an intermediate point between the lattice points, the control current is determined by four-point interpolation calculation based on values of the four closest lattice points.

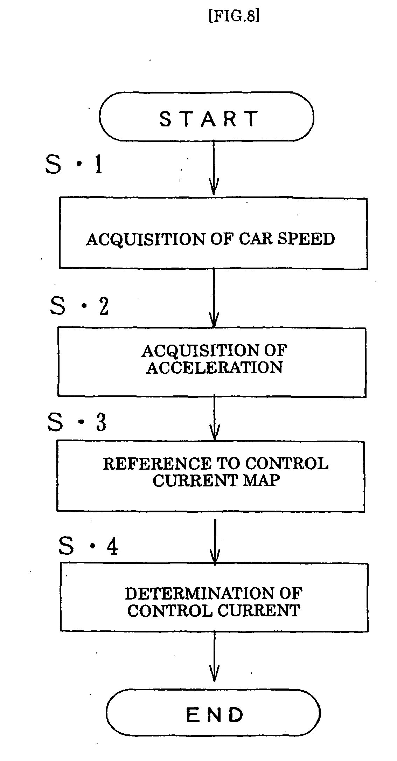

Fig. 8 shows a procedure for determination of the control current in the control device 40. The control device 40 firstly acquires the car speed from the car body speed 41 (S1), subsequently acquires the acceleration from the acceleration sensor 42 (S2), then makes reference to the control current map based on these detected values (S3), and then determines the appropriate control current (S4). In this case, the four-point interpolation calculation is carried out when appropriate. The determined control current is given to the linear solenoid, and one procedure for determination of the control current is completed by determining this control current. However, this procedure for determination of the control current is repeatedly executed at a given time interval when the vehicle is running.

Next, operations of this embodiment will be described. When the vehicle is running, the respective detection signals are constantly inputted from the speed sensor 41 and the acceleration sensor 42 to the control device 40, then the control current is determined by means of comparison with the control current map based on the car speed and the acceleration thus detected, and the linear solenoid is controlled by this control current to adjust the degree of narrowing the variable valve 38 relative to the bypass passage 37, thereby adjusting the damping force of the steering damper 10.

When the car speed is equal to or below the first reference speed V1, the damping force is in the low speed side fixation range Z1, and the damping force of the steering damper 10 is fixed to the minimum value C1 to minimize the load on the handgrip. For this reason, it is possible to achieve nimble handling in the low speed range at the time of a turn, for example, where it is important to give priority to finer maneuverability of the car body as compared to the demand for suppressing deflection of the handgrip.

When the car speed is equal to or above the second reference speed V2, the damping force is in the high speed side fixation range Z2, and the damping force of the steering damper 10 is fixed to the maximum value C2 to maximize the load on the handgrip. Accordingly, deflection of the handgrip is suppressed and the movement of the car body is stably maintained in the high speed range, where it is important to give priority to suppression of the deflection of the handgrip attributable to artificial manipulation as much as possible by increasing the load on the handgrip, such as when driving straight at high speed, and where a large handgrip operation is not required.

In the intermediate variation range Z3 where the car speed is above the first reference speed V1 but below the second reference speed V2, the damping force of the steering damper 10 is variably adjusted in response to the car speed and the acceleration. The damping force is adjusted by use of the acceleration to prepare for occurrence of the kickback; accordingly, it is possible to suppress deflection of the handgrip at the time of occurrence.

In this case, as shown in the intermediate curved lines A to D of Fig. 5, the damping force is adjusted to be slightly larger than the reference straight line L along with the increase in the acceleration. Accordingly, even if a large kickback occurs in response to the increase in the acceleration, it is possible to prepare for this in advance. In addition, by forming the nonlinear curved line, it is possible to perform adjustment so as to generate the optimal damping force in response to the magnitude of the car speed and of the acceleration.

Moreover, since the damping force is determined by use of the control current map as shown in Fig. 6, it is possible to adjust the damping force in the intermediate variation range Z3 so as to harmonize maneuverability of the handgrip, stability of the handgrip, and suppression of the kickback in a good balance, and thereby to adjust the load on the handgrip to the optimal value relative to the car speed and the acceleration.
- 1: FRONT WHEEL
- 2: FRONT FORK
- 3: CAR BODY FRAME
- 10: STEERING DAMPER
- 11: TOP BRIDGE
- 14: STEERING SHAFT
- 23: SHAFT
- 24: ARM PORTION
- 26: BOSS
- 31: MOMENT SENSOR
- 33: WING PORTION
- 34: RIGHT LIQUID CHAMBER
- 35: LEFT LIQUID CHAMBER
- 37: BYPASS PASSAGE
- 38: VARIABLE VALVE
- 40: CONTROL DEVICE
- 41: SPEED SENSOR
- 42: ACCELERATION SENSOR
- 46: CURRENT CONTROL PORTION

Fig. 4

| | |
|---|---|
| 40 | CONTROL DEVICE |
| 41 | SPEED SENSOR |
| 42 | ACCELERATION SENSOR |
| 43 | THROTTLE SENSOR |
| 44 | REVOLUTION SENSOR |
| 45 | GEAR POSITION SENSOR |

Fig. 5
DAMPING FORCE C
CAR SPEED V
ACCELERATION A
ACCELERATION B
ACCELERATION C
ACCELERATION D
Fig. 6
CONTROL CURRENT
ACCELERATION
ACCELERATION n
ACCELERATION j
ACCELERATION 1
CAR SPEED 1
CAR SPEED i
CAR SPEED n
CAR SPEED
Fig. 7
ACCELERATION
CAR SPEED
CAR SPEED LATTICE POINT 1
CAR SPEED LATTICE POINT i
CAR SPEED LATTICE POINT n
ACCELERATION LATTICE POINT 1
CONTROL CURRENT (1, 1)
CONTROL CURRENT (i, 1)
CONTROL CURRENT (n, 1)
ACCELERATION LATTICE POINT j
CONTROL CURRENT (1, j)
CONTROL CURRENT (i, j)
CONTROL CURRENT (n, j)
ACCELERATION LATTICE POINT n
CONTROL CURRENT (1, n)
CONTROL CURRENT (i, n)
CONTROL CURRENT (n, n)
Fig. 8
- S1: ACQUISITION OF CAR SPEED
- S2: ACQUISITION OF ACCELERATION
- S3: REFERENCE TO CONTROL CURRENT MAP
- S4: DETERMINATION OF CONTROL CURRENT

## Claims

1. A steering damper device for a motorcycle, having a steering damper (10) configured to apply damping force to a rotational operation of a front wheel steering system supported by a front portion of a vehicle body (3) and to render magnitude of this damping force variable, and controlling means (40) for adjusting the damping force of this steering damper (10), wherein
the controlling means (40) adjusts the damping force based on vehicle speed, and
the damping force is fixed to a maximum when the vehicle speed is equal to or above a second reference speed (V2) which is greater than a first reference speed (V1),
the steering damper device **characterised in that**
the damping force is fixed to a minimum when the vehicle speed is equal to or below a first reference speed (V1), and
only when the vehicle speed is in an intermediate speed range (Z3) between the first reference speed (V1) and the second reference speed (V2), the controlling means (40) adds acceleration as a parameter in addition to the vehicle speed and causes the damping force to vary depending on the vehicle speed and the acceleration of the vehicle body (3).

2. The steering damper device according to claim 1,
**characterised in that**
the controlling means (40) variably adjusts the damping force in response to a variation in the vehicle speed when the vehicle speed is in the intermediate speed range (Z3).

3. The steering damper device according to any of the preceding claims,
**characterized in that**
in the intermediate speed range (Z3), the damping force is adjusted to a high level when the acceleration of a vehicle is at a high level.

## Patentansprüche

1. Lenkungsdämpfervorrichtung für ein Motorrad mit einem Lenkungsdämpfer (10), der ausgestaltet ist, eine Dämpfungskraft auf einen Drehvorgang eines Vorderradlenksystems, das durch einen vorderen Bereich eines Fahrzeugkörpers (3) gelagert ist, auszuüben und die Stärke dieser Dämpfungskraft variabel zu erbringen, und mit einem Steuermittel (40) zur Anpassung der Dämpfungskraft dieses Lenkungsdämpfers (10), worin
das Steuermittel (40) die Dämpfungskraft basierend auf der Fahrzeuggeschwindigkeit einstellt, wobei
die Dämpfungskraft auf ein Maximum festgelegt ist, wenn die Fahrzeuggeschwindigkeit gleich einer zweiten Referenzgeschwindigkeit (V2) ist oder darüber liegt, welche größer als eine erste Referenzgeschwindigkeit (V1) ist,
worin die Lenkungsdämpfervorrichtung **dadurch gekennzeichnet ist, dass**
die Dämpfungskraft auf ein Minimum festgelegt ist, wenn die Fahrzeuggeschwindigkeit gleich einer ersten Referenzgeschwindigkeit (V1) ist oder darunter liegt und
dass nur, wenn die Fahrzeuggeschwindigkeit in einem Zwischengeschwindigkeitsbereich (Z3) zwischen der ersten Referenzgeschwindigkeit (V1) und der zweiten Referenzgeschwindigkeit (V2) liegt, das Steuermittel (40) die Beschleunigung als einen Parameter zusätzlich zur Fahrzeuggeschwindigkeit hinzuzieht und bewirkt, dass die Dämpfungskraft in Abhängigkeit von der Fahrzeuggeschwindigkeit und der Beschleunigung des Fahrzeugkörpers (3) variiert.

2. Lenkungsdämpfervorrichtung gemäß Anspruch 1,
**dadurch gekennzeichnet, dass**
das Steuermittel (40) variabel die Dämpfungskraft in Reaktion auf eine Variation der Fahrzeuggeschwindigkeit anpasst, wenn die Fahrzeuggeschwindigkeit in dem Zwischengeschwindigkeitsbereich (Z3) liegt.

3. Lenkungsdämpfervorrichtung gemäß einem der vorhergehenden Ansprüche,
**dadurch gekennzeichnet, dass**
in dem Zwischengeschwindigkeitsbereich (Z3) die Dämpfungskraft auf ein hohes Level angepasst wird, falls die Beschleunigung eines Fahrzeugs sich auf einem hohen Level befindet.

## Revendications

1. Dispositif amortisseur de direction pour une motocyclette, ayant un amortisseur de direction (10) configuré pour appliquer une force d'amortissement à une opération de rotation d'un système de direction de roue avant supporté par une partie avant d'une carrosserie de véhicule (3), et pour rendre variable l'amplitude de cette force d'amortissement, et des moyens de commande (40) pour ajuster la force d'amortissement de cet amortisseur de direction (10), dans lequel
les moyens de commande (40) ajustent la force d'amortissement basée sur la vitesse du véhicule, et
la force d'amortissement est fixée à un maximum lorsque la vitesse du véhicule est égale ou supérieure à une seconde vitesse de référence (V2) qui est supérieure à une première vitesse de référence (V1),
le dispositif amortisseur de direction étant **caractérisé en ce que**
la force d'amortissement est fixée à un minimum lorsque la vitesse du véhicule est égale ou inférieure à une première vitesse de référence (V1), et
uniquement lorsque la vitesse du véhicule est dans une plage de vitesse intermédiaire (Z3) entre la première vitesse de référence (V1) et la seconde vitesse de référence (V2), les moyens de commande (40) ajoutent une accélération en tant que paramètre en plus de la vitesse du véhicule, et amène la force d'amortissement à varier selon la vitesse du véhicule et l'accélération de la carrosserie de véhicule (3).

2. Dispositif amortisseur de direction selon la revendication 1, **caractérisé en ce que** les moyens de commande (40) ajustent de manière variable la force d'amortissement en réponse à une variation de la vitesse du véhicule lorsque la vitesse du véhicule est dans la plage de vitesse intermédiaire (Z3).

3. Dispositif amortisseur de direction selon l'une quelconque des revendications précédentes, **caractérisé en ce que**, dans la plage de vitesse intermédiaire (Z3), la force d'amortissement est ajustée à un niveau élevé lorsque l'accélération d'un véhicule est à un niveau élevé.
